## Europäisches Patentamt

(19) **European Patent Office**

**Office européen des brevets**

(11) Veröffentlichungsnummer: **0 047 483**
**B1**

(12) **EUROPÄISCHE PATENTSCHRIFT**

(45) Veröffentlichungstag der Patentschrift:
**23.01.85**

(21) Anmeldenummer: **81106852.7**

(22) Anmeldetag: **02.09.81**

(51) Int. Cl.⁴: **G 05 D 21/02**, B 01 D 1/00,
F 28 C 1/00, F 24 F 6/00,
F 22 B 37/56

(54) **Verfahren zur Regelung des Flüssigkeitshaushalts in einer Verdunstungsanlage.**

(30) Priorität: **09.09.80 DE 3033815**

(43) Veröffentlichungstag der Anmeldung:
**17.03.82 Patentblatt 82/11**

(45) Bekanntmachung des Hinweises auf die Patenterteilung:
**23.01.85 Patentblatt 85/4**

(84) Benannte Vertragsstaaten:
**AT BE CH DE FR GB IT LI LU NL SE**

(56) Entgegenhaltungen:
**DE - A - 1 105 962**
**DE - A - 2 344 873**
**US - A - 3 196 892**
**US - A - 3 450 265**
**US - A - 3 627 032**
**US - A - 3 754 741**
**US - A - 3 759 387**

(73) Patentinhaber: **Henkel Kommanditgesellschaft auf Aktien, Postfach 1100 Henkelstrasse 67, D-4000 Düsseldorf-Holthausen (DE)**

(72) Erfinder: **Kiessling, Jürgen, Spich Laubweg 4, D-5210 Troisdorf (DE)**
Erfinder: **Kiessling, Herbert, Ulmenstrasse 17, D-5047 Wesseling (DE)**

(74) Vertreter: **Selting, Günther et al, Patentanwälte Von Kreisler-Schönwald-Fues-Keller Selting-Werner Deichmannhaus am Hauptbahnhof, D-5000 Köln 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Regeleinrichtung zur Regelung des Flüssigkeitshaushaltes einer Verdunstungsanlage, mit einer in den Kreislauf der Verdunstungsanlage führenden Zulaufleitung, die ein niveaugesteuertes Zulaufventil und einen ersten Durchflußmesser enthält, einer aus dem Kreislauf herausführenden Ablaufleitung, die ein Ablaufventil enthält, und mit einem von Impulsen des ersten Durchflußmessers gesteuerten ersten Zähler, wobei das Öffnen des Ablaufventils in Abhängigkeit von den Impulsen des ersten Durchflußmessers erfolgt.

Bei Kühl- oder Verdampfungsanlagen ist in einem offenen Kreislauf eine bestimmte Flüssigkeitsmenge, z. B. Wasser, vorhanden, von der jeweils ein Teil einem Verdunstungskühler oder Verdampfer zugeführt wird. Dort verdampft ein Teil der Flüssigkeit, wobei die in der Flüssigkeit enthaltenen Lösungsbestandteile, wie z. B. Salze, zurückbleiben, so daß die Konzentration der Lösungsbestandteile in der nicht verdampfenden Flüssigkeit sich erhöht. Die verdampfte Flüssigkeitsmenge wird durch Zufuhr von Frischflüssigkeit ausgeglichen. Um zu verhindern, daß die Konzentration der Lösungsbestandteile in der im Kreislauf befindlichen Flüssigkeit ständig ansteigt, muß dem Kreislauf eine bestimmte Menge an Flüssigkeit mit hohem Konzentrationsgehalt an Lösungsbestandteilen entzogen werden. Diesen Vorgang bezeichnet man als Abschlämmen. Den Hauptbestandteil in einem Wasserkreislauf bilden die Salze (z. B. Chloride). Die vom Salzgehalt abhängige Leitfähigkeit wird daher häufig für die Regelung der Konzentration sämtlicher Lösungsbestandteile benutzt. Bei der Konzipierung einer Verdunstungsrückkühlanlage wird unter Berücksichtigung der Beschaffenheit des zuzuführenden Frischwassers die »Eindikkungszahl EZ« festgelegt. Diese Eindickungszahl gibt das Verhältnis (Salzgehalt im Kühlkreislauf) : (Salzgehalt im Frischwasser) an. Wenn die Eindickungszahl EZ = 2 ist, bedeutet dies, daß der Salzgehalt im Kühlkreislauf doppelt so groß ist wie der Salzgehalt im Frischwasser. Um die Eindickungszahl EZ = 2 aufrechtzuerhalten, muß jeweils dann, wenn eine bestimmte Menge an Frischwasser zugeführt worden ist, die halbe Menge an Abschlämmwasser aus dem Kreislauf abgelassen werden. Wenn Beispielsweise 10 l Frischwasser zugeführt worden sind, um eine Menge von 5 l aus dem Kreislauf abgelassen werden.

Die Eindickungszahl EZ kann bei einer Verdunstungsrückkühlanlage in der Regel beispielsweise Werte zwischen etwa 1,1 und 9,9 annehmen. Wenn man die Abschlämmwassermenge $G_{wa}$ in Abhängigkeit von der zugeführten Frischwassermenge $G_{wz}$ regeln will, so geschieht dies nach der Beziehung

$$G_{wa} = \frac{G_{wz}}{EZ}.$$

Werden die betreffenden Wassermengen inkremental durch Impulszählung ermittelt bzw. vorgegeben, dann ergibt sich für die Abschlämmwassermenge $G_{wa}$ in der Regel keine ganzzahlige Größe. Die Abschlämmwassermenge kann daher auf dem Wege dieser Rechnung nicht generell durch eine bestimmte Impulszahl repräsentiert werden. Bei einer Aufrundung bzw. Abrundung des Wertes für die Abschlämmwassermenge entstehen Ungenauigkeiten.

Bei einer bekannten Regeleinrichtung der eingangs genannten Art (US-A-3 759 387) sind in der Zulaufleitung ein schwimmergesteuertes Zulaufventil und ein Durchflußmesser enthalten. Die Impulse des Durchflußmessers werden von einem Zähler gezählt und außerdem einem Zeitglied zugeführt, das nach jedem ankommenden Impuls die Magnetspule eines Ablaufventils für eine bestimmte Zeitspanne öffnet, um einen Abschlämmvorgang durchzuführen. Hier wird also bei jedem Impuls des Durchflußmessers das Zeitglied in Betrieb gesetzt und ein Abschlämmvorgang durchgeführt. Der Zähler dient lediglich dazu, die Gesamtmenge zugeführten Frischwassers ablesen zu können. Eine Funktion im Regelsystem hat dieser Zähler nicht. Jedesmal wenn die vorbestimmte Frischwassermenge zugeführt worden ist, wird dem Zeitglied ein Impuls zugeführt, woraufhin das Zeitglied das Ablaufventil für eine kurze Zeitspanne öffnet. Bei dieser Regeleinrichtung kann die Eindickungszahl der Verdunstungsanlage nur schwer verändert werden, weil entweder diejenige Menge verändert werden muß, die durch den Durchflußmesser hindurchfließt um einen Impuls zu erzeugen, oder die Laufdauer des Zeitgliedes. Eine Veränderung am Durchflußmesser ist aber schwierig vorzunehmen und erfordert in der Regel einen Eingriff in die mechanische Konstruktion, während die Zeitsteuerung des Ablaufventils zwar verändert werden kann, aber zu ungenauen Ergebnissen führt.

Der Erfindung liegt die Aufgabe zugrunde, eine Regeleinrichtung der eingangs genannten Art dahingehend zu verbessern, daß die Eindikkungszahl einerseits exakt eingehalten und andererseits auf einfache Weise definiert verändert werden kann.

Die Lösung dieser Aufgabe besteht erfindungsgemäß darin, daß der Zählerstand des ersten Zählers mit einem an einer Eingabeeinrichtung voreinstellbaren ersten Maximalwert in einem ersten Komparator verglichen wird, der bei Koinzidenz seiner Vergleichssignale das Öffnen des Ablaufventils veranlaßt, daß ein in die Ablaufleitung geschalteter zweiter Durchflußmesser einen Zähler steuert, dessen Zählerstand in einem zweiten Komparator mit einem zweiten Maximalwert verglichen wird, und daß der zweite Komparator bei Koinzidenz seiner Vergleichssignale das Schließen des Ablaufventils veranlaßt.

Bei diesem Regelverfahren wird der Verdun

stungsanlage bei jedem Abschlämmvorgang dieselbe Flüssigkeitsmenge entzogen. Die Häufigkeit, mit der die Abschlämmvorgänge stattfinden, wird bestimmt durch die Menge der Frischflüssigkeit, die zur Ersetzung der verdampften Flüssigkeit in den Kreislauf hineingegeben wird, sowie von der eingestellten Eindickungszahl. Ist die Eindickungszahl hoch, dann werden auch die Intervalle, in denen die Abschlämmung einer bestimmten Flüssigkeitsmenge aus dem Kreislauf erfolgt, länger. Dagegen verkürzen sich die Zeitintervalle zwischen zwei Abschlämmvorgängen, wenn die Menge an Frischflüssigkeit, die zu dem Kreislauf zugeführt wird, um die Verdunstungsmenge zu ersetzen, größer wird.

Die oben angegebene Gleichung wird zur Ermittlung der benötigten Zusatzwassermenge wie folgt umgeformt:

$$G_{wz} = G_{wa} \cdot EZ.$$

Wenn man die Eindickungszahl EZ, die normalerweise eine Stelle hinter dem Komma aufweist, mit 10 multipliziert, ergibt die erforderliche Zusatzwassermenge $G_{wz}$ immer ein ganzzahliges Vielfaches der (fest eingestellten) Abschlämmwassermenge $G_{wa}$. Werden beide Wassermengen durch Impulszählung ermittelt, erhält man für die Zusatzwassermenge $G_{wz}$, nach deren Zuführung in den Kreislauf eine Abschlämmung erfolgen muß, stets eine ganzzahlige Impulszahl.

Die Zufuhr von Frischflüssigkeit erfolgt nach einer Niveauregelung. Auf diese Weise wird in dem Kreislauf stets die gleiche Flüssigkeitsmenge beibehalten bzw. die dem Kreislauf durch Verdampfung, Abschlämmung oder auf andere Weise entzogene Flüssigkeit wird mengenmäßig ersetzt. Jeweils dann, wenn eine vorbestimmte und von der vorgewählten Eindickungszahl EZ abhängige Frischflüssigkeitsmenge dem Kreislauf zugeführt worden ist, erfolgt ein normierter Abschlämmvorgang, bei dem dem Kreislauf eine definierte Flüssigkeitsmenge entzogen wird. Auf diese Weise wird ohne Messung des Konzentrationsgehalts der Lösungsbestandteile die vorgewählte Eindickungszahl EZ zwangsläufig auf den vorgesehenen Wert konstant gehalten. Eine Leitfähigkeitsmessung, die die Anbringung von Elektroden in dem Flüssigkeitskreislauf erfordern würde, ist bei dem erfindungsgemäßen Regelverfahren nicht notwendig. Leitfähigkeitsmessungen haben den Nachteil einer großen Störempfindlichkeit, da die Elektroden leicht verschmutzen können.

Bei der Regeleinrichtung wird nur ein einziges Regelventil benötigt, das als Schaltventil ausgebildet und in die Ablaufleitung des Kreislaufs geschaltet ist. Jedesmal dann, wenn die zugeführte Menge an Frischflüssigkeit einen bestimmten Wert erreicht hat, wird das Ablaufventil geöffnet, und wenn die abgelaufene Flüssigkeitsmenge den voreingestellten Wert erreicht hat, wird das Ablaufventil wieder geschlossen. Eine derartige Regelung ist nicht nur mit einfachen elektronischen Mitteln durchführbar, sondern sie gewährleistet auch noch eine extrem hohe Genauigkeit und Betriebssicherheit. Der gespeicherte erste Maximalwert entspricht der Eindickungszahl, multipliziert mit einem Faktor von 10 oder einem Vielfachen von 10.

Gemäß einer bevorzugten Ausführungsform der Erfindung ist mindestens einem der Zähler ein Impulsuntersetzer vorgeschaltet. Durch die Möglichkeit der Impulsuntersetzung vor den Zählern ist eine weitgehende Anpassung sowohl an vorhandene Frischflüssigkeitszähler als auch an unterschiedliche Durchflußmengen möglich.

Um zu verhindern, daß im Falle einer Störung eines Durchflußmessers oder an einer anderen Stelle des Reglers das Ablaufventil über eine zu lange Zeit geöffnet bleibt, ist eine vorteilhafte Weiterbildung der Erfindung dadurch gekennzeichnet, daß ein zweites Zeitglied vorgesehen ist, daß bei jedem Ablaufvorgang gesetzt wird und dessen Laufdauer größer ist als die normale Zeit zwischen zwei Ablaufvorgängen, und daß das zweite Zeitglied bei Ablauf seiner Laufzeit die Öffnung des Absperrventils veranlaßt.

Wenn der erste Durchflußmengenmesser oder ein anderes Element der Regeleinrichtung versagt, kann es vorkommen, daß die Abschlämmung zu dem Zeitpunkt, zu dem sie erfolgen müßte, unterbleibt. Um dies zu verhindern, ist gemäß einer bevorzugten Ausführungsform der Erfindung ein zweites Zeitglied vorgesehen, das bei jedem Ablaufvorgang gesetzt wird und dessen Laufdauer größer ist als die normale Zeit zwischen zwei Ablaufvorgängen und das bei Ablauf seiner Laufdauer die Öffnung des Absperrventils veranlaßt. Auf diese Weise ist sichergestellt, daß der Abschlämmvorgang, wenn er nicht durch die normale Regelung herbeigeführt wird, jedenfalls nach Ablauf der Laufdauer des entsprechenden Zeitgliedes vorgenommen wird.

Die Erfindung ist in erster Linie bei industriellen Verdampfungsanlagen anwendbar, bei denen die Verdampfung z. B. in Kühltürmen erfolgt. Sie eignet sich aber auf allen Gebieten, in denen ein Teil einer Flüssigkeit verdampft, so daß sich die Konzentration der Lösungsbestandteile in der restlichen Flüssigkeit vergrößert. Dies ist beispielsweise bei der Speisung von Dampfkesseln der Fall, wo stets nur ein Teil der zugeführten Wassermenge verdampfen darf. In dem restlichen Wasser erhöht sich der Salzgehalt, so daß ein Teil dieses Wassers abgeleitet werden muß. Die Ableitung des Wassers kann nach dem erfindungsgemäßen Regelverfahren bzw. unter Einsatz der erfindungsgemäßen Regeleinrichtung in Abhängigkeit vom Frischwasserzulauf erfolgen. Das Verfahren ist auch z. B. bei Luftwäschern bzw. Luftbefeuchtungsanlagen anwendbar.

Die Erfindung ist ferner nicht auf Wasserkreisläufe beschränkt, sondern generell auch bei anderen Flüssigkeiten anwendbar, von denen ein Teil unter Zurücklassung der Lösungsbestandteile verdampft.

Im folgenden wird unter Bezugnahme auf die Zeichnungen ein bevorzugtes Ausführungsbeispiel der Erfindung näher erläutert. Es zeigt

Fig. 1 eine schematische Darstellung des Wasserkreislaufs einer Verdunstungsrückkühlanlage mit Regelung der Abschlämmwassermenge und

Fig. 2 ein Blockschaltbild der Regeleinrichtung, die in dem Kreislauf nach Fig. 1 benutzt wird.

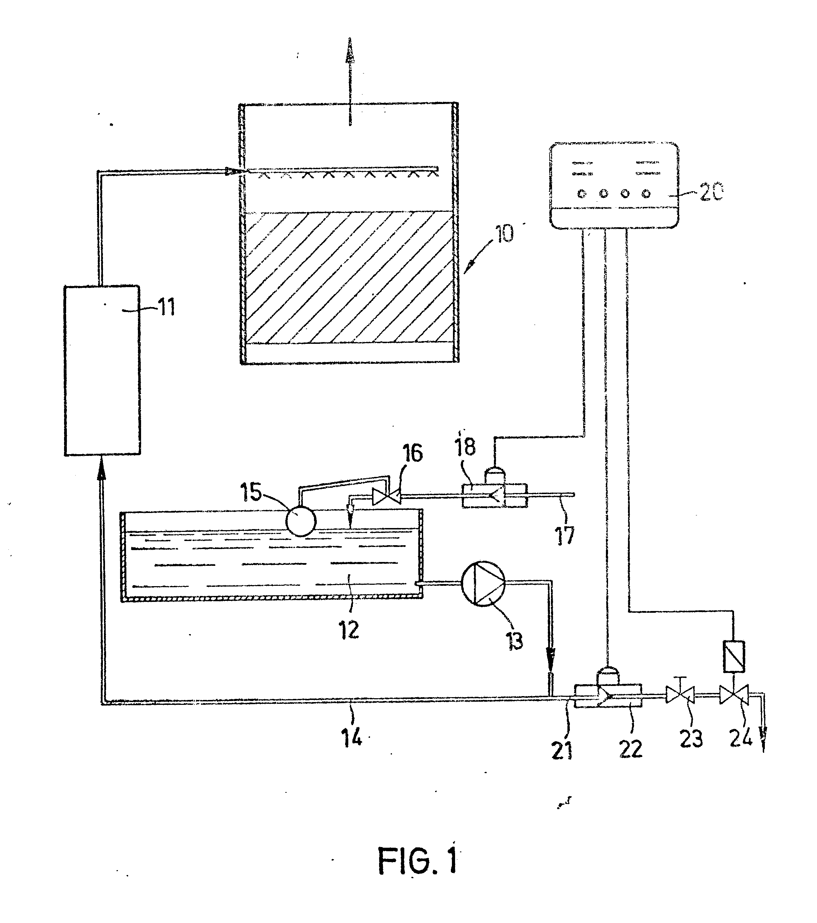

In Fig. 1 ist mit 10 ein Verdunstungskühler bezeichnet, bei dem es sich beispielsweise um einen Kühlturm handeln kann. Dem Verdunstungskühler 10 wird das von einem Verbraucher 11 erwärmte Wasser zugeführt. Im Verdunstungskühler 10 verdampft ein Teil des Wassers, während das übrige Wasser durch die entstehende Verdunstungskälte gekühlt wird. Das abgekühlte Wasser fällt aus dem Verdunstungskühler 10 in ein Kühlwasserreservoir 12, das unterhalb des Verdunstungskühlers angeordnet ist. Von dem Kühlwasserreservoir 12 führt über eine Pumpe 13 eine Leitung 14 zum Verbraucher 11. Auf diese Weise wird das Kühlwasser aus dem Reservoir 12 dem Verbraucher 11 zugeführt, wo es sich erwärmt. Anschließend erfolgt eine Abkühlung im Verdunstungskühler 10 und der Rücklauf in das Reservoir 12.

Da ein Teil der Kühlwassermenge im Verdunstungskühler 10 durch Verdampfung entweicht, muß dem Reservoir 12 Frischwasser zugeführt werden. Zu diesem Zweck ist ein durch einen Schwimmer 15 geregeltes Ventil 16 in eine Frischwasserleitung 17 eingeschaltet, die in das Reservoir 12 mündet. Der Schwimmer 15 bewirkt in Verbindung mit dem Ventil 16 die Einhaltung eines konstanten Wasserstandes im Kühlwasserreservoir 12.

In die Frischwasserleitung 17 ist ein Durchflußmesser 18 geschaltet, bei dem es sich z. B. um einen Kontaktwasserzähler handeln kann, der mit einem Flügelrad ausgestattet ist, das von dem die Leitung 17 durchströmenden Wasser angetrieben wird und nach Durchfluß einer bestimmten Wassermenge jeweils einen Impuls abgibt. Diese Impulse werden der Regeleinrichtung 20 zugeführt.

Die Leitung 14 des Kreislaufs ist an eine Ablaufleitung 21 angeschlossen, die einen Durchflußmesser 22 enthält, der in gleicher Weise ausgebildet sein kann wie der Durchflußmesser 18. Auch der Durchflußmesser 22 liefert der Durchflußmenge entsprechende Impulse an die Regeleinrichtung 20.

In die Ablaufleitung 21 ist ferner ein manuell bedienbares Absperrventil 23 und ein Magnetventil 24 geschaltet. Das Magnetventil 24 wird von der Regeleinrichtung 20 in noch zu erläuternder Weise gesteuert.

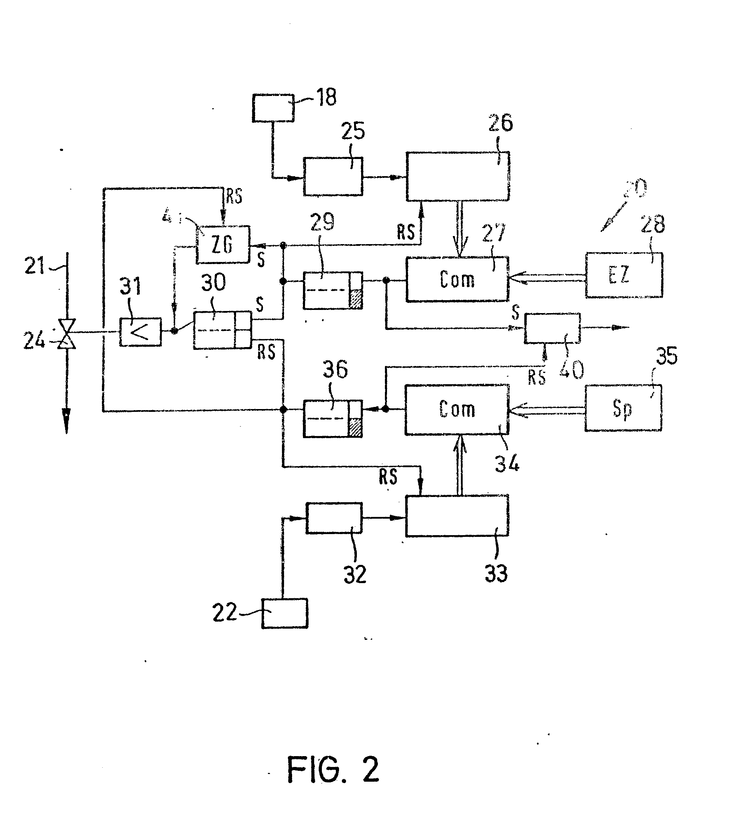

Gemäß Fig. 2 werden in der Regeleinrichtung 20 die Impulse des Durchflußmessers 18 einem elektronischen Impulsuntersetzer 25 zugeführt, der jedoch nur zur Anpassung der Regeleinrichtung an den jeweils verwendeten Durchflußmessertyp 25 erforderlich ist, und eventuell auch fortgelassen werden kann. Der Impulsuntersetzer 25 erzeugt jeweils nach einer voreinstellbaren Anzahl von Eingangsimpulsen einen Ausgangsimpuls, der an den ersten Zähler 26 abgegeben wird. Der Zähler 26 zählt bzw. akkumuliert die ankommenden Impulse, so daß sein Zählerstand stets ein Maß für die Menge des zugeführten Frischwassers darstellt. Der Zählerstand wird an den ersten Eingang eines Komparators 27 gelegt. Der zweite Eingang des Komparators 27 ist mit einer Eingabeeinrichtung 28 verbunden, an der die Eindickungszahl EZ manuell eingestellt werden kann. Der der Eindickungszahl EZ entsprechende Wert wird in digitaler Form an den Komparator 27 abgegeben. Wenn der Zählerstand des Zählers 26 den Wert der eingestellten Eindickungszahl EZ erreicht hat, liefert der Komparator 27 ein Ausgangssignal an eine monostabile Kippstufe 29, die einen Impuls vorbestimmter Dauer an den Setzeingang S eines Flip-Flops 30 liefert. Das Flip-Flop 30 kippt daraufhin in den Setzzustand und bewirkt über einen Leistungsverstärker 31 das Öffnen des Magnetventils 24.

Die Menge des bei geöffnetem Magnetventils 24 durch die Ablaufleitung 21 hindurchfließenden Abschlämmwassers wird in dem Durchflußmesser 22 in Impulse umgesetzt, die direkt oder über einen Impulsteiler 32 dem zweiten Zähler 33 zugeführt werden. Der zweite Zähler 33 ist mit dem ersten Eingang des zweiten Komparators 34 verbunden, während der zweite Eingang dieses Komparators 34 mit einem Speicher 35 verbunden ist, der eine feste Zahl, z. B. die Zahl 10, gespeichert enthält. Sobald der Zählerstand des Zählers 33 mit der in dem Speicher 35 gespeicherten Zahl übereinstimmt, gibt der Komparator 34 ein Signal an eine monostabile Kippstufe 36, die daraufhin einen Impuls an den Rücksetzeingang RS des Flip-Flops 30 liefert. Das Flip-Flop 30 wird somit rückgesetzt und schließt über den Leistungsverstärker 31 das Magnetventil 24.

Der Ausgang des Flip-Flops 29 ist mit dem Rücksetzeingang RS des Zählers 26 verbunden, so daß der Zählerstand des Zählers 26 jedesmal dann, wenn der Komparator 27 ein Ausgangssignal liefert, auf Null zurückgesetzt wird.

In ähnlicher Weise ist der Ausgang der monostabilen Kippstufe 36 mit dem Rücksetzeingang RS des Zählers 33 verbunden, so daß dieser Zähler auf Null gesetzt wird, wenn der Komparator 34 ein Ausgangssignal liefert.

Während die in dem Speicher 28 gespeicherte Eindickungszahl EZ durch eine geeignete Eingabeeinrichtung eingestellt bzw. verändert werden kann, ist der Inhalt des Speichers 35 normalerweise fest.

Wenn die durch die Zulaufleitung 17 (Fig. 1) zugeführte Frischwassermenge einen bestimmten Wert erreicht hat, der der im Speicher 28 gespeicherten Eindickungszahl EZ entspricht, gibt der Komparator 27 ein Ausgangssignal ab, wodurch über die monostabile Kippstufe 29 das Flip-Flop 30 gesetzt und das Magnetventil 24 geöffnet wird. Daraufhin fließt Abschlämmwasser durch die Ablaufleitung 21. Die Menge dieses Abschlämmwassers wird gezählt. Wenn die entsprechende Impulszahl den im Speicher 35 gespeicherten festen Wert, z. B. den Wert 10, er-

reicht hat, gibt der Komparator 34 ein Ausgangssignal ab, wodurch über die monostabile Kippstufe und das Flip-Flop 30 das Magnetvnetil 24
geschlossen wird.

Hieraus ergibt sich, daß die Abschlämmwassermenge stets gleich ist, weil sie durch die in
dem Speicher 35 gespeicherte Zahl vorgegeben
ist. Wird dagegen die Eindickungszahl EZ durch
Verstellen des Inhalts des Speichers 28 verändert, so ändert sich die Zulaufwassermenge, die
in das Reservoir 12 hineinlaufen muß, bevor ein
Abschlämmvorgang erfolgt.

Der Ausgang des Komparators 27 ist mit dem
Setzeingang S eines Zeitgliedes 40 verbunden,
dessen Rücksetzeingang RS an den Ausgang
des Komparators 34 angeschlossen ist. Die Laufdauer des Zeitgliedes 40 ist größer als die normalerweise für einen Abschlämmvorgang benötigte Zeit. Wenn das Zeitglied 40 vollständig abläuft, erzeugt es ein Ausgangssignal, das eine
Alarmeinrichtung betätigt und/oder das Magnetventil 24 abschaltet. Auf diese Weise ist sichergestellt, daß der Abschlämmvorgang nach Ablauf einer bestimmten Zeit mit Sicherheit beendet wird, auch dann, wenn beispielsweise das
Flügelrad des Durchflußmessers 22 klemmt.

Eine weitere Sicherheitsschaltung besteht aus
dem Zeitglied 41, dessen Setzeingang S an den
Ausgang der monostabilen Kippstufe 29 und
dessen Rücksetzeingang RS an den Ausgang der
monostabilen Kippstufe 36 angeschlossen ist.
Das Zeitglied 41, bei dem es sich um eine Zeituhr
handeln kann, hat eine Laufdauer, die größer ist
als die maximal zwischen zwei Abschlämmvorgängen verstreichende Zeit. Wenn die vollständige Laufdauer des Zeitgliedes 41 abläuft, bewirkt das Zeitglied 41 das Öffnen des Magnetventils 24. Auf diese Weise wird dafür gesorgt,
daß der Abschlämmvorgang auch dann stattfindet, wenn beispielsweise das Flügelrad des
Durchflußmessers 18 klemmt. In diesem Fall wird
eine entsprechende Warneinrichtung in Funktion
gesetzt.

**Patentansprüche**

1. Regeleinrichtung zur Regelung des Flüssigkeitshaushaltes einer Verdunstungsanlage, mit
einer in den Kreislauf der Verdunstungsanlage
führenden Zulaufleitung (17), die ein niveaugesteuertes Zulaufventil (16) und einen ersten
Durchflußmesser (18) enthält, einer aus dem
Kreislauf herausführenden Ablaufleitung (21),
die ein Ablaufventil (24) enthält, und mit einem
von Impulsen des ersten Durchflußmessers (18)
gesteuerten ersten Zähler (26), wobei das Öffnen
des Ablaufventils (24) in Abhängigkeit von den
Impulsen des ersten Durchflußmessers (18) erfolgt, dadurch gekennzeichnet, daß der Zählerstand des ersten Zählers (26) mit einem an einer
Eingabeeinrichtung (28) voreinstellbaren ersten
Maximalwert in einem ersten Komparator (27)
verglichen wird, der bei Koinzidenz seiner Vergleichssignale das Öffnen des Ablaufventils (24)

veranlaßt, daß ein in die Ablaufleitung (21) geschalteter zweiter Durchflußmesser (22) einen
Zähler (33) steuert, dessen Zählerstand in einem
zweiten Komparator (34) mit einem zweiten Maximalwert verglichen wird, und daß der zweite
Komparator (34) bei Koinzidenz seiner Vergleichssignale das Schließen des Ablaufventils
(24) veranlaßt.

2. Regeleinrichtung nach Anspruch 1, dadurch
gekennzeichnet, daß ein Zeitglied (40) vorgesehen ist, das bei jedem Öffnen des Ablaufventils
(24) gesetzt und bei jedem Schließen des Ablaufventils rückgesetzt wird, daß die Laufzeit des
ersten Zeitgliedes (40) größer ist als die normale
Öffnungszeit des Ablaufventils (24) und daß das
erste Zeitglied (40) bei Ablauf seiner Laufzeit
eine Alarmeinrichtung und/oder die Absperrung
des Ablaufventils auslöst.

3. Regeleinrichtung nach Anspruch 1 oder 2,
dadurch gekennzeichnet, daß ein zweites Zeitglied (41) vorgesehen ist, das bei jedem Ablaufvorgang gesetzt wird und dessen Laufdauer größer ist als die normale Zeit zwischen zwei Ablaufvorgängen, und daß das zweite Zeitglied (41)
bei Ablauf seiner Laufzeit die Öffnung des Absperrventils (24) veranlaßt.

**Claims**

1. A control system for controlling the liquid
balance of an evaporation plant, comprising a
feed pipe (17) which opens into the circuit of the
evaporation plant and which contains a levelcontrolled feed valve (16) and a first throughflow
meter (18); a discharge pipe (21) which leads out
of the circuit and which contains a discharge
valve (24); and a first counter (26) controlled by
the pulses of the first throughflow meter (18), the
discharge valve (24) opening in dependence upon the pulses of the first throughflow meter (18),
characterized in that the count of the first counter (26) is compared with a first maximum value
presettable at an input (28) in a first comparator
(27) which, in the event of coincidence of its
comparison signals, initiates the opening of the
discharge valve (24); in that a second throughflow meter (22) incorporated in the discharge
pipe (21) controls a counter (33) of which the
count is compared with a second maximum value
in a second comparator (34); and in that, in the
event of coincidence of its comparison signals,
the second comparator initiates closure of the
discharge valve (24).

2. A control system as claimed in Claim 1, characterized in that a timer (40) is provided and is
set each time the discharge valve (24) opens and
reset each time the discharge valve closes; in
that the running time of the first timer (40) is
longer than the normal opening time of the discharge valve (24); and in that, at the end of its
running time, the first timer (40) triggers off an
alarm and/or shutoff of the discharge valve.

3. A control system as claimed in Claim 1 or 2,
characterized in that a second timer (41) is provided which is set with every discharge cycle and of which the running time is longer than the normal time between two discharge cycles and in that, at the end of its running time, the second timer (41) initiates opening of the shutoff vale (24).

## Revendications

1. Système de régulation du conditionnement d'un liquide pour une installation d'évaporation, comportant une tuyauterie d'alimentation (17), qui aboutit au circuit de l'installation d'évaporation, et qui est pourvue d'une vanne d'alimentation (16) asservie au niveau et d'un premier débit-mètre (18); une tuyauterie de sortie (21), qui part du circuit et comporte une vanne de sortie (24); et un premier compteur (26) commandé par des impulsions du premier débit-mètre (18); avec un agencement tel que l'ouverture de la vanne de sortie (24) est commandée en fonction des impulsions du premier débit-mètre (18); le système étant caractérisé ence que l'état du premier compteur (26) est comparé, dans un premier comparateur (27), avec une première valeur maximum introduite au préalable dans du système d'affichage (28); le signal de coïncidence du comparateur provoquant alors l'ouverture de la vanne de sortie (24); en ce que la tuyauterie de sortie (21) comporte un second débit-mètre (22) pour commander un compteur (33) dont l'état est comparé, dans un second comparateur (34), avec une seconde valeur maximum; et en ce que le signal de coïncidence du secon comparateur (34) provoque la fermeture de la vanne de sortie (24).

2. Système de régulation conforme à la revendication 1, caractérisé en ce qu'il comporte un premier élément temporisé (40), qui est déclenché à chaque ouverture de la vanne de sortie (24), et remis à zéro à chaque fermeture de cette vanne de sortie; en ce que la durée de fonctionnement du premier élément temporisé (40) est supérieure à la durée d'ouverture normale de la vanne de sortie (24); et en ce que le premier élément temporisé (40), à l'issue de sa durée de fonctionnement, déclenche un système d'alarme et/ou la fermeture de la vanne de sortie (24).

3. Système de régulation selon l'une des revendications 1 ou 2, caractérisé en ce qu'il comporte un second élément chronométrique (41) qui est mis en marche à chaque opération de sortie, et dont la durée de fonctionnement est supérieure au laps de temps normal entre deux opérations de sortie; et en ce que le second élément chronométrique (41), à l'issue de sa durée de fonctionnement, provoque l'ouverture de la vanne de sortie (24).

FIG. 1

FIG. 2